Europäisches Patentamt

European Patent Office

Office européen des brevets

(11) Publication number: **0 571 979 A2**

# EUROPEAN PATENT APPLICATION

(21) Application number: **93108503.9**

(22) Date of filing: **26.05.93**

(51) Int. Cl.5: **G06K 9/62**

(30) Priority: **27.05.92 JP 158926/92**

(43) Date of publication of application:
**01.12.93 Bulletin 93/48**

(84) Designated Contracting States:
**DE FR GB**

(71) Applicant: **EZEL INC.**
**New Koishikawa Bldg.**
**5-11-17, Koishikawa**
**Bunkyo-ku, Tokyo 112(JP)**

(72) Inventor: **Hong, Zi Ouan, c/o EZEL Inc.**
**2-22-2, Koishikawa Bunkyo-ku**
**Tokyo 112(JP)**
Inventor: **Kumagai, Ryohei**
**c/o EZEL Inc.,**
**2-22-2, Koishikawa Bunkyo-ku**
**Tokyo 112(JP)**
Inventor: **Oooshiro, Tetsuo**
**c/o EZEL Inc.**
**2-22-2, Koishikawa Bunkyo-ku**
**Tokyo 112(JP)**

(74) Representative: **Patentanwälte Grünecker,**
**Kinkeldey, Stockmair & Partner**
**Maximilianstrasse 58**
**D-80538 München (DE)**

(54) **A recognizing method of characters.**

(57) The present invention has an object to provide a high recognition ratio of recognizing method of characters according to a condensed information by density projection.

A recognizing method relating to this invention calculates the characteristics space which has the optimal distribution of groups of a primitive characteristics vector of a sample character, obtains a secondary characteristics vector by projecting a primitive characteristics vector into the characteristics space of a character, the characteristics of which is to be extracted.

Figure 1

## FIELD OF THE INVENTION

The present invention relates to a recognizing method of characters, for example, to a recognizing method of characters according to characteristics information of characters.

## BACKGROUND OF THE INVENTION

As a recognizing method of characters, there is a well-known method in that a density projection is calculated by projecting a character taken by a camera on X-axis and Y-axis directions. However, an information based on a density projection is easily influenced by a relative position between lines composing a character. Also, in the case performing recognition according to characteristics of density projection, a large amount of information is needed.

Furthermore, recognition ratio becomes lower because of unnecessary information in the large amount of information,

## SUMMARY OF THE INVENTION

The present invention solves the above conventional problems and has an object to provide a high recognition ratio of recognizing method of characters according to the compressed information from a density projection.

A recognizing method of characters relating to this invention performs recognition of characters by calculating a characteristics space which makes optimal distribution of groups of a primitive characteristics vectors of a sample character and obtaining a secondary characteristics vector by projecting the primitive characteristics vector into the characteristics space of a character, the characteristics of which is to be extracted.

A recognizing method of characters according to the present invention enables recognition of a character based on more abstract information.

## BRIEF DESCRIPTION OF THE DRAWINGS

Figure 1 is a flow chart showing from step 1 to step 12 relating to an embodiment of the present invention.

Figure 2 is a flow chart showing from step 13 to step 16 relating to an embodiment of the present invention.

Figure 3 is a diagram showing a direction of density projection and its image.

## PREFERRED EMBODIMENT OF THE PRESENT INVENTION

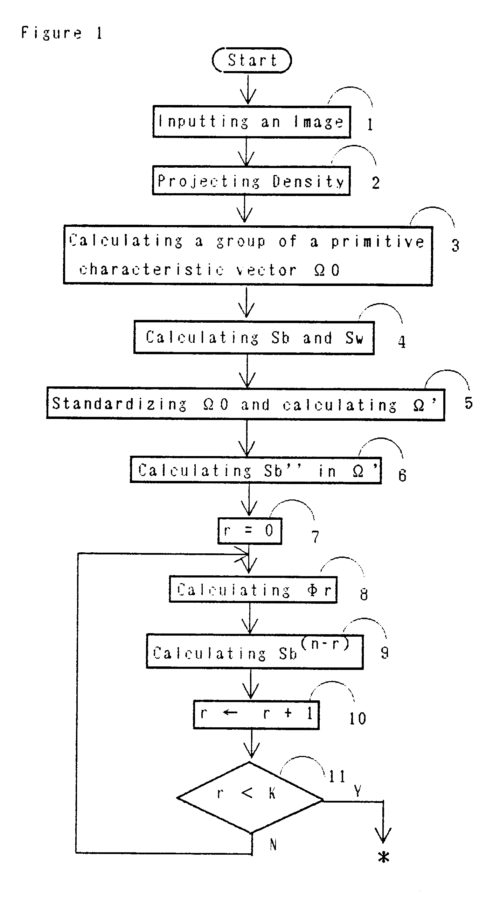

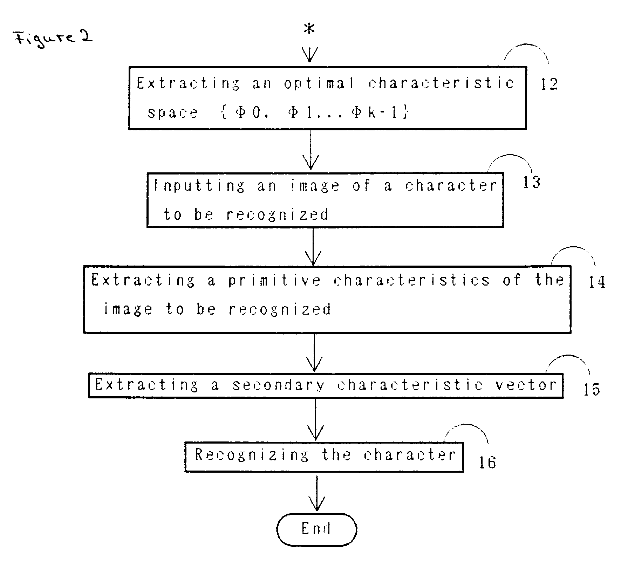

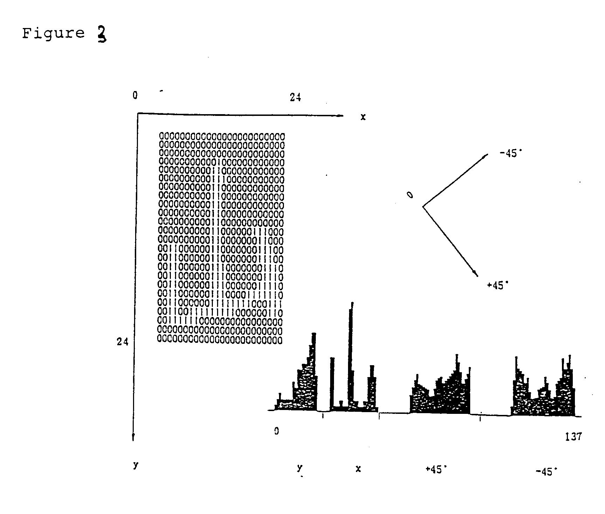

Hereinafter, an embodiment of a recognizing method of characters according to the present invention is described with referring to the attached drawings. Figures 1 and 2 are flow charts of the present invention. At first, a process making a model of optimal characteristic space is explained from step 1 to step 12.

One of sample characters is converted into the predetermined size and input by a camera on step 1. Sample characters mean a list of characters to be a recognized. For example, in the case there are 5,000 words and 20 kinds of figures for each character, the number of samples is 100,000. A density projection of the input image is calculated on step 2. The density projection is performed on the direction of the X-axis, Y-axis and $+$-45° (Figure 3). The density projection used here consists of 138 pixels in total, with width of 24 pixels in X-axis and Y-axis, and 45 pixels in $+$-45° directions.

A primitive vector is calculated from this density projection. This primitive vector is a vector consisting of elements of 138 data of the density projection. A space defined by this primitive characteristics vector is called a "primitive characteristics space". This processing is performed on every sample characters. That is, 20 sample characters are processed in the i-th character, and finally 20 sample characters are processed in the 5,000-th character. The group of a primitive characteristics vector of a sample character is calculated on step 3.

Next, a matrix of a co-variance within class Sw is calculated so that a distribution of one character is obtained, and a matrix of a co-variance between classes Sb is calculated so that a distance between different characters is obtained on step 4.

Next, a primitive characteristic space $\Omega$o is normarized on step 5. That is, a unit matrix I is calculated from Sw. After that, in the primitive characteristic space $\Omega$' normalized on step 6, new matrix of a co-variance between classes Sb" is calculated so that the distance between different characters is calculated. The formula is shown below.

$$Sb'' = (P^{-1})^T Sb P^{-1}$$

P : converting matrix

T : transposing operator of a matrix

Next, a characteristic space of 138 dimension normarized on step 5 is compressed into a characteristic space of newly designated dimension K, optimal distinguishing vectors in the dimension $\Phi$

and Sb'' are calculated and an optimal characteristics space is extracted with respect to that dimension. These processings are performed from step 7 to step 12. In order to extract an optimal distinguishing vector $\Phi$ on step 8, here, well-known Fisher's distinctive function is used. The formula is shown below.

$$J_F(\Phi) = \Phi^T Sb'' \Phi$$

$J_F$ :    Fisher's distinctive function
$\Phi$ :    Optimal Distinction Vector

This Fisher's distinctive function is set to be maximum. That is, the vector is calculated, whose matrix of the variance between classes is maximum so that the distance between different characters is maximized, as well as, matrix of the variance within the class is minimized. The distribution in a characters is minimized. The vector calculated here is the optimal characteristics distinguishing vector.

Sb(n-r) is calculated on step 9, which is the r-th calculation result of Sb'' during the compression process from the characteristics space of 138 dimensions to the space of K dimensions. The calculation formula is shown below.

$$Sb^{(n-r)} = Pn\text{-}r^T Sb'' Pn\text{-}r$$

Pn-r :    converting matrix of $\{n \times (n\text{-}r)\}$
n :    a dimension of a primitive characteristic space
r :    the number of times of looping

Whether r is larger than the number of dimension K of the newly designated characteristics space or not is judged on step 11. If r is smaller than K, the process goes to step 8 because compression is not enough, If r is larger than K, it means compression into the newly designated characteristics space is completed. The process goes to step 12 and extracts the optimal characteristics space at the dimensions.

Next, optimal extraction of characteristics of a Chinese character to be recognized and the process of recognition are explained from step 13 to step 16. At first, inputting a character image to be recognized on step 13, a density projection is calculated on step 14, and a primitive characteristics is extracted. Next, an optimal distinctive characteristics is extracted on step 15. That is, a secondary characteristics vector is calculated by projecting a primitive characteristics vector into the optimal characteristics space calculated on step 12.

On step 16, in order to recognize which character has the secondary characteristic vector obtained on step 15, this secondary characteristics vector is input into the next formula.

$$Di(a) = -1n \mid Ci \mid - \{(a\text{-}bi)^T Ci^{-1}(a\text{-}bi)\}$$
$$i = 1,2,...,c$$

a :    a secondary characteristics vector of a Chinese character
c :    the number of kinds of Chinese characters
$C_i$ :    sample of a matrix of variance in the optimal characteristic space $\Omega$ of the i-th character.
$b_i$ :    sample of the mean vector in the optimal characteristic space $\Omega$ of the i-th character.
T :    transposing operator
$Ci^{-1}$ :    inverted matrix of matrix Ci

If the result of the calculation of this formula is 100, the character to be recognized is regarded as the 100th character processed on step 2, for example.

On recognition experiment using printed sample character of ETL2, when an optimal distinguishing vector of 11 dimension is used, it is possible to recognize with highly successful ratio of 99.524%.

As mentioned above, according to the present invention, in spite of a small amount of compressed information, high recognizing ratio can be guaranteed.

**Claims**

1. A recognizing method of characters comprising steps of;
    i) inputting a sample image of characters one by one;
    ii) calculating a density projection of said each sample image;
    iii) extracting a primitive characteristics vector from each said density projection;
    iv) calculating a characteristics space of predetermined dimension for optimal distribution of groups of primitive characteristics vectors of each character;
    v) inputting an objective image of a character to be recognized;
    vi) calculating a density projection from said objective image;
    vii) calculating a primitive characteristic vector from said density projection of said objective image;
    viii) calculating a secondary characteristics vector by projecting said primitive characteristic vector of said objective image to said characteristics space; and
    ix) recognizing a character from said secondary characteristic vector.

**2.** A recognizing method of characters as claimed in Claim 1, wherein a density projection is performed with respect to vertical, horizontal and inclined direction.

**3.** A recognizing method of characters as claimed in Claim 1, wherein data of inclined direction of a density projection consists of projection of +45° and -45° directions.

**4.** A recognizing method of characters as claimed in Claim 1, wherein a secondary characteristics vector is generated by compression of said primitive characteristics vector by a converter matrix.

**5.** A recognizing method of characters as claimed in Claim 1, wherein said compression is repeated until the number of looping is larger than the number of dimension of new designated characteristics space.

Figure 1

Start

1 — Inputting an Image

2 — Projecting Density

3 — Calculating a group of a primitive characteristic vector $\Omega 0$

4 — Calculating Sb and Sw

5 — Standardizing $\Omega 0$ and calculating $\Omega'$

6 — Calculating Sb'' in $\Omega'$

7 — $r = 0$

8 — Calculating $\Phi r$

9 — Calculating $Sb^{(n-r)}$

10 — $r \leftarrow r + 1$

11 — $r < K$   Y / N

*

Figure 2

```
                              *
                              ↓
        ┌─────────────────────────────────────┐
        │ Extracting an optimal characteristic│  12
        │   space  {Φ0.  Φ1...Φk-1}            │
        └─────────────────────────────────────┘
                              ↓
        ┌─────────────────────────────────────┐
        │ Inputting an image of a character   │  13
        │   to be recognized                  │
        └─────────────────────────────────────┘
                              ↓
      ┌───────────────────────────────────────────┐
      │ Extracting a primitive characteristics of the│  14
      │   image to be recognized                  │
      └───────────────────────────────────────────┘
                              ↓
      ┌───────────────────────────────────────────┐
      │ Extracting a secondary characteristic vector│  15
      └───────────────────────────────────────────┘
                              ↓
        ┌───────────────────────────────────┐
        │ Recognizing the character         │  16
        └───────────────────────────────────┘
                              ↓
                        ( End )
```

Figure 3